# EUROPÄISCHE PATENTSCHRIFT

(11) **EP 3 584 377 B1**
(45) Veröffentlichungstag und Bekanntmachung des Hinweises auf die Patenterteilung: **30.07.2025**
(21) Anmeldenummer: 19179448.6
(22) Anmeldetag: 11.06.2019
(51) Int. Cl.: F16B 7/14, E03C 1/06

(54) **STANGENMONTIERBARE HALTERUNG**
ROD-MOUNTABLE SUPPORT
SUPPORT POUVANT ÊTRE MONTÉ SUR TIGES

(30) Priorität: 20.06.2018 DE 102018209985
(43) Veröffentlichungstag der Anmeldung: 25.12.2019
(73) Patentinhaber: Hansgrohe SE, 77761 Schiltach (DE)
(72) Erfinder: HERZOG, Uwe, 77866 Rheinau/Diersheim (DE)
(74) Vertreter: Patentanwälte Ruff, Wilhelm, Beier, Dauster & Partner mbB

(56) Entgegenhaltungen:
- CN-U- 206 545 241
- DE-A1- 19 705 285
- DE-U1- 202004 006 168
- JP-A- 2008 184 765
- US-A1- 2015 233 101

## Beschreibung

Die Erfindung bezieht sich auf eine stangenmontierbare Halterung mit einem Haltekörper, der zum Anbringen an einer Stange eingerichtet ist, wobei es sich insbesondere um eine Halterung für eine sanitäre Handbrause handeln kann. In letzterem Fall kann der Haltekörper verschieblich oder nicht verschieblich an einer Handbrausenstange montiert werden.

Diverse herkömmliche stangenmontierbare, d.h. zur Montage an einer Stange bestimmte und eingerichtete, Halterungen dieser Art, insbesondere in Form von Handbrausenhalterungen, sind beispielsweise in den Patentschriften JP 2008 184765 A, EP 0 965 699 B1, DE 23 42 613 B2, EP 2 703 569 B1, EP 0 733 747 B1, und US 8.448.270 B2 sowie den Offenlegungsschriften DE 103 03 169 A1, EP 1 921 214 A1, WO 2011/088763 A1, US 2015/0233101 A1 und DE 10 2010 063 968 A1 und der Gebrauchsmusterschrift DE 20 2004 006 168 U1offenbart.

Bei einem weit verbreiteten Typ derartiger Halterungen ist der Haltekörper zum verschiebbaren Anbringen an einer Stange eingerichtet und weist eine Stangendurchführungsöffnung für die Stange auf, wobei die Halterung des Weiteren eine zwischen einer Klemmposition und einer Freigabeposition bewegliche Klemmeinheit, die bei an der Stange angebrachtem Haltekörper in der Freigabeposition eine Verschiebung des Haltekörpers entlang der Stange freigibt und in der Klemmposition eine Klemmkraft ausübt, die eine Verschiebung des Haltekörpers entlang der Stange blockiert, und eine Bedieneinheit zum nutzerbetätigten Bewegen der Klemmeinheit zwischen ihrer Klemmposition und ihrer Freigabeposition umfasst. Damit kann ein Benutzer bei Bedarf durch entsprechende Betätigung der Bedieneinheit die Halterung, die z.B. bei Verwendung als Handbrausenhalterung geeignete Mittel zum vorzugsweise abnehmbaren Halten einer Handbrause aufweist, von ihrer Klemmposition an der Stange lösen, sie entlang der Stange verschieben und an der neuen Stangenposition wieder in ihre Klemmposition an der Stange zurückbringen.

Die Offenlegungsschrift DE 10 2015 226 624 A1 offenbart eine derartige Handbrausenhalterung, bei der die Klemmeinheit von zwei elastisch von einer klemmspaltverringernden Klemmposition in eine klemmspaltvergrößernde Verschiebeposition aufspreizbaren Klemmbacken gebildet ist, welche die Haltestange wenigstens teilweise umgreifen und zwischen sich einen Klemmspalt definieren. In den Klemmspalt kann sich verschiebbar ein Keilelement der Bedieneinheit hineinerstrecken. Die Klemmbacken können mittels eines elastischen Elements in die Klemmposition vorgespannt sein oder alternativ eigenelastisch bzw. federnd ausgeführt sein.

Eine weitere derartige Handbrausenhalterung ist in der Offenlegungsschrift JP 2008-184765 A offenbart. Bei der dortigen Handbrausenhalterung umfasst die Klemmeinheit eine einzelne Schraubendruckfeder, die in einem verengenden Zustand die Klemmposition der Klemmeinheit bereitstellt und in einem demgegenüber aufgeweiteten Zustand, in den sie durch axiales Zusammendrücken bewegbar ist, die Freigabeposition der Klemmeinheit bereitstellt. Zum axialen Zusammendrücken der Schraubendruckfeder weist die zugehörige Bedieneinheit zwei axial beabstandete Gleitblöcke auf, die der Benutzer über zugehörige, hebelförmige Handhaben in axialer Richtung aufeinanderzu bewegen kann.

Bei einem andersartigen Typ von stangenmontierbaren Halterungen ist der Haltekörper zum verschiebbaren Anbringen an einer Stange eingerichtet und weist eine Stangendurchführungsöffnung für die Stange sowie eine zwischen einer Klemmposition und einer Freigabeposition bewegliche Klemmeinheit auf, welche die Halterung mit einer nutzerbetätigt überwindbaren Klemmkraft an der Stange geklemmt hält. Der Benutzer kann die Halterung dadurch entlang der Stange verschieben, dass er eine die Klemmkraft übersteigende Verschiebekraft auf die Halterung ausübt. Die Klemmkraft kann dabei durch entsprechendes Verstellen der Klemmeinheit variabel einstellbar sein. Eine Handbrausenhalterung dieses Typs ist in der Offenlegungsschrift DE 197 05 285 A1 offenbart.

Es sind auch bereits verschiedentlich an einer Handbrausenstange montierbare Handbrausenhalterungen der eingangs genannten Art in Gebrauch, deren Haltekörper ein an der Handbrausenstange verschieblich oder nicht verschieblich montierbares Stangenhalteteil, ein Brausenhalteteil zum Halten der Handbrause und eine Drehkopplung umfasst, durch die das Brausenhalteteil an das Stangenhalteteil relativ zu diesem mindestens in einer ersten Drehrichtung, optional zusätzlich in einer der ersten entgegengesetzten zweiten Drehrichtung verdrehbar gekoppelt ist. Das Stangenhalteteil kann z.B. eine Stangendurchführungsöffnung aufweisen, durch die sich im montierten Zustand der Halterung die Stange hindurch erstreckt. Das Brausenhalteteil kann z.B. eine Aufnahme zum abnehmbaren Aufnehmen der Handbrause, speziell eines Handbrausenkörpers derselben oder eines an diesen angeschlossenen Handbrausenschlauchs, aufweisen. Dabei kann das Brausenhalteteil vom Benutzer bei Bedarf verdreht werden, um die daran angeordnete Handbrause entsprechend anders zu orientieren.

Der Erfindung liegt als technisches Problem die Bereitstellung einer stangenmontierbaren Halterung der eingangs genannten Art zugrunde, die gegenüber den herkömmlichen Halterungen Vorteile hinsichtlich Funktionalität, Bedienkomfort und/oder Herstellungsaufwand bietet.

Die Erfindung löst dieses Problem durch die Bereitstellung einer stangenmontierbaren Halterung mit den Merkmalen des Anspruchs 1. Vorteilhafte Weiterbildungen sind in den Unteransprüchen angegeben.

Erfindungsgemäß umfasst die stangenmontierbare Halterung einen zum verschieblichen Anbringen an einer Stange eingerichteten Haltekörper mit einer Stangendurchführung für die Stange, eine zwischen einer Klemmposition und einer Freigabeposition bewegliche Klemmeinheit, die von einer sich um die Stangendurchführungsöffnung herumschlingenden Schlingfedereinheit gebildet ist und bei an der Stange angebrachtem Haltekörper in der Freigabeposition eine Verschiebung des Haltekörpers entlang der Stange freigibt und in der Klemmposition eine Klemmkraft ausübt, die eine Verschiebung des Haltekörpers entlang der Stange blockiert, und eine Bedieneinheit zum nutzerbetätigten Bewegen der Klemmeinheit bzw. Schlingfedereinheit zwischen ihrer Klemmposition und ihrer Freigabeposition.

Die Schlingfedereinheit umfasst mehrere, in einer Längsachsenrichtung der Stangendurchführungsöffnung nebeneinander angeordnete Schlingfedern, die sich jeweils über mehr als 180° um die Stangendurchführungsöffnung herumschlingen, und/oder eine Schlingfeder, die sich über mehr als 360° um die Stangendurchführungsöffnung herumschlingt. Die jeweilige Schlingfeder ist an ihren beiden Enden durch die Bedieneinheit zwischen einem die Klemmposition der Klemmeinheit bereitstellenden, verengenden Zustand und einem die Freigabeposition der Klemmeinheit bereitstellenden, aufweitenden Zustand bewegbar, wozu die Bedieneinheit vorzugsweise mit einem oder beiden Enden der Schlingfeder zusammenwirkt.

Die mit dieser Klemmeinheit ausgerüstete Halterung benötigt nur vergleichsweise wenig Herstellungsaufwand und besitzt sehr günstige funktionelle Eigenschaften hinsichtlich lösbar klemmender Fixierung an einer Stange. Sie eignet sich insbesondere als Halterung für eine sanitäre Handbrause bzw. einen entsprechenden Handbrausenkörper an einer Handbrausenstange, z.B. in einem Duschraum, wo sie in üblicher Weise dazu dienen kann, den Handbrausenkörper höhenverstellbar oder auch, für entsprechende Seitenbrausen, entlang einer horizontalen Handbrausenstange verschiebbar zu halten. Die spezielle Klemmeinheit in Form der Schlingfedereinheit ermöglicht einerseits in ihrer Klemmposition ein sicheres Fixieren der Halterung an der Stange und andererseits in ihrer Freigabeposition ein ausreichend leichtgängiges Verschieben der Halterung entlang der Stange.

Die Schlingfedereinheit bietet viele Freiheitsgrade, um das Klemmverhalten dieser Klemmeinheit sowohl in der Klemmposition als auch in der Freigabeposition in einer für den jeweiligen Anwendungsfall bestmöglichen, gewünschten Weise einzustellen. Dazu gehören beispielsweise die Wahl des Umschlingungswinkels, d.h. über wieviel Grad bzw. in wie vielen Windungen/Wicklungen sich die Schlingfedereinheit um die Stangendurchführungsöffnung herumschlingt, die Wahl des Federmaterials für die eine oder mehreren Schlingfedern, die Wahl der Anzahl von mehreren nebeneinander angeordneten Schlingfedern, die Wahl des Durchmessers der Windungen/Wicklungen sowie die Querschnittsfläche und die Querschnittsform eines für die jeweilige Schlingfeder verwendeten Federmaterials. Bei Bedarf kann die Schlingfedereinheit z.B. so ausgelegt sein, dass sie in der Freigabeposition noch eine geringfügige, vom Benutzer leicht überwindbare Klemmkraft bereitstellt, so dass die Halterung an einer vertikalen Stange nicht unbeabsichtigt herunterfällt, wenn der Benutzer die Bedieneinheit zum Lösen der Klemmung betätigt. Außerdem kann durch eine derartige geeignete Auslegung der Schlingfedereinheit auf einfache Weise dafür gesorgt werden, dass sich die vom Benutzer aufzuwendende Kraft zum Verschieben der Halterung durch unterschiedliche Oberflächenzustände der Stange, z.B. trocken, feucht oder ölbelegt, allenfalls geringfügig ändert. Durch entsprechende Verwendung von Schenkelfedereinheiten mit unterschiedlichem Wicklungsdurchmesser kann die Halterung zudem ohne größeren Aufwand an unterschiedliche Durchmesser der durchzuführenden Stange angepasst werden.

In der Ausführung mit mehreren, in Längsachsenrichtung der Stangendurchführungsöffnung nebeneinander angeordneten Schlingfedern kann die Klemmkraft in der Klemmposition ebenso wie eine optional verbleibende, geringfügige Klemmkraft in der Freigabeposition durch Wahl einer entsprechenden Anzahl an Schlingfedern in gewünschter Weise eingestellt bzw. verändert werden. Das Anordnen der mehreren Schlingfedern erhöht zudem die Funktionssicherheit bzw. Ausfallsicherheit, da die beabsichtigte Klemmfunktion z.B. im Fall des Bruchs einer Schlingfeder von der oder den übrigen Schlingfedern noch in ausreichender Weise sichergestellt werden kann.

In der Ausführung mit der sich über mehr als 360° um die Stangendurchführung herumschlingenden Schlingfeder ist die auf die Stange einwirkende Klemmkraft über entsprechend den gesamten Stangenumfang relativ gleichmäßig verteilt, was sich ebenfalls positiv auf das Klemmverhalten auswirken kann. Die Bedieneinheit ist in diesem Fall eine Druckknopfeinheit mit einem auf die Schlingfedereinheit wirkenden Druckknopf oder eine Drehknopfeinheit mit einem auf die Schlingfedereinheit wirkenden Drehknopf. Die Drehknopfeinheit stellt für entsprechende Anwendungen ein komfortables Bedienverhalten für den Benutzer dar. Er kann die Bedieneinheit z.B. schon mit nur einem Finger sicher betätigen und bei Bedarf mit den übrigen Fingern die Halterung greifen und an der Stange verschieben. Auch die Drehknopfausführung kann für entsprechende Anwendungen von Vorteil sein und bei Bedarf eine Einhandbedienung der Halterung ermöglichen. Sie lässt sich z.B. selbst bei längerem erforderlichem Betätigungsweg zum Versetzen der Schlingfedereinheit von der Klemmposition in die Freigabeposition vergleichsweise kompakt bauen, da der Betätigungsweg in diesem Fall über den Drehwinkel des Drehknopfs bestimmt ist und sich der Drehwinkel in der Regel nicht baugrößenerhöhend auswirken braucht. Mit einem längeren Betätigungsweg lässt sich bei Bedarf die erforderliche Betätigungskraft zur Überwindung der Klemmkraft der Schlingfedereinheit reduzieren. Je nach Bedarf kann die Drehknopfvariante so ausgeführt sein, dass der Drehknopf nur in einer Drehrichtung oder alternativ in der einen und in der entgegengesetzten anderen Drehrichtung gedreht werden kann, um die Klemmeinheit in ihre Freigabeposition zu versetzen.

In der Bedienvariante mit Druckknopf ist der Druckknopf mit einer bezüglich der jeweiligen Schlingfeder radialen Hauptrichtungskomponente beweglich angeordnet, und eine zugehörige Druckknopf-Kniehebelkopplung oder Druckknopf-Kulissenführung sorgt dafür, dass die Bewegung des Druckknopfs in dieser Richtung in eine Spreizbewegung der Enden der jeweiligen Schlingfeder mit einer bezüglich der jeweiligen Schlingfeder tangentialen Hauptrichtungskomponente übersetzt wird. Dabei ist mit der tangentialen Richtung die zur Umschlingungs-/Umfangsrichtung der Schlingfeder tangentiale Richtung bezeichnet, mit der radialen Richtung die dazu senkrechte Richtung quer zur Längsmittenachse der Schlingfeder. Unter dem Begriff Hauptrichtungskomponente ist jeweils zu verstehen, dass die tatsächliche Richtung der betreffenden Druckknopf- bzw. Schlingfederbewegung nicht genau dieser radialen bzw. tangentialen Richtung entsprechen muss, die Richtungskomponente der Bewegung jedoch in dieser Richtung größer ist als in dazu senkrechter Richtung. In dieser Ausführung kann folglich die betreffende Schlingfeder durch die Druckknopfbetätigung, bei der es sich wie üblich um eine transversale Betätigungsbewegung handelt, aufgespreizt werden, um ihre Klemmkraft zu lösen oder jedenfalls zu reduzieren.

In der Bedienvariante mit Drehknopf ist der Drehknopf um eine Drehachse mit einer bezüglich der jeweiligen Schlingfeder radialen Hauptrichtungskomponente beweglich angeordnet. Eine zugordnete Drehknopf-Kulissenführung sorgt dafür, dass die Drehbewegung des Drehknopfs in eine Spreizbewegung der Enden der jeweiligen Schlingfeder mit einer bezüglich der jeweiligen Schlingfeder tangentialen Hauptrichtungskomponente übersetzt wird. Somit kann in diesem Fall durch das Drehen des Drehknopfs wiederum die Schlingfeder aufgespreizt und dadurch die Schlingfedereinheit von ihrer Klemmposition in ihre Freigabeposition versetzt werden.

In entsprechenden Realisierungen umfasst die Schlingfedereinheit eine Kombination von mehreren, in der Längsachsenrichtung der Stangendurchführungsöffnung nebeneinander angeordneten Schlingfedern, von denen sich eine oder mehrere bis hin zu allen Schlingfedern über mehr als 360° um die Stangendurchführungsöffnung herumschlingen. Entsprechende Ausführungen der Bedieneinheit, wie vorstehend zur Realisierungsvariante der Schlingfedereinheit mit sich um mehr als 360° um die Stangendurchführungsöffnung herumschlingender Schlingfeder, können optional auch für die Realisierung der Schlingfedereinheit mit den mehreren nebeneinander angeordneten, sich jeweils über mehr als 180° erstreckenden Schlingfedern vorgesehen sein.

In einer Weiterbildung der Erfindung liegen die mehreren, in der Längsachsenrichtung der Stangendurchführungsöffnung nebeneinander angeordneten Schlingfedern mit Berührkontakt gegeneinander an und bilden auf diese Weise ein Schlingfederpaket. Dies kann konstruktive und funktionelle Vorteile bieten.

In einer Weiterbildung der Erfindung umfasst die Schlingfedereinheit eine Schlingfeder, die sich über mehr als 720° um die Stangendurchführungsöffnung herumschlingt, d.h. diese Schlingfeder umgibt die Stangendurchführungsöffnung in zwei oder mehr Windungen bzw. Wicklungen. Auch dies kann konstruktive und funktionelle Vorteile bieten. Beispielsweise kann diese Schlingfeder dann aus schwächerem Drahtmaterial gefertigt werden und dennoch eine vergleichbar große Klemmkraft bereitstellen wie eine Schlingfeder aus stärkerem Drahtmaterial, die sich nur um bis zu 360° oder jedenfalls in weniger als zwei Windungen um die Stangendurchführungsöffnung herumschlingt. Wenn sich die Schlingfeder in der hierzu üblichen Schraubenfederform in mehr Wicklungen um die Stangendurchführungsöffnung herumschlingt, verbreitert dies zudem die mögliche Kontaktfläche zwischen Schlingfedereinheit und durch die Öffnung durchgeführter Stange, was für das Klemmverhalten der Klemmeinheit ebenfalls vorteilhaft sein kann.

In einer Weiterbildung der Erfindung befinden sich die beiden Enden der jeweiligen Schlingfeder auf einer bezüglich der Stangendurchführungsöffnung gleichen Seite. Dies kann die Kopplung der Schlingfedereinheit mit der Bedieneinheit erleichtern bzw. vereinfachen, speziell wenn die Bedieneinheit mit den Enden der Schlingfedereinheit zusammenwirkt.

In einer Weiterbildung der Erfindung ist der verengende Zustand der jeweiligen Schlingfeder ein Ausgangszustand derselben, in den die Schlingfeder vom aufweitenden Zustand eigenelastisch selbsttätig zurückkehrt. Dies bedeutet, dass die Schlingfedereinheit in ihre Klemmposition vorgespannt ist. Mittels der Bedieneinheit kann der Benutzer die Schlingfedereinheit in die Freigabeposition versetzen, und nach dieser Bedienbetätigung durch den Benutzer kann die Schlingfedereinheit selbsttätig wieder in ihre Klemmposition zurückkehren.

In einer Weiterbildung der Erfindung beinhaltet die Halterung eine offene, elastische Klemmhülse, welche die Stangendurchführungsöffnung definiert. Dabei schlingt sich die Schlingfedereinheit um die Klemmhülse herum. Da die Klemmhülse offen und elastisch ist, kann sie sich zusammenziehen und dadurch auf die durchgeführte Stange drücken, wenn sich die Schlingfedereinheit in ihren verengenden Zustand bewegt. Mit der Klemmhülse kann bei Bedarf durch die mit ihr einhergehende Erhöhung der Kontaktfläche mit der Stange die Klemmkraft der Schlingfedereinheit sehr gleichmäßig auf die Stange übertragen werden. Zudem lässt sich mit ihr ein direkter Kontakt der einen oder mehreren Schlingfedern mit der Stange vermeiden, wenn hierfür Bedarf besteht, so dass z.B. hinsichtlich der Wahl des Materials für die Schlingfedereinheit keine Rücksicht auf das Material bzw. die Oberfläche der Stange genommen werden braucht. Durch Verwenden von Klemmhülsen mit unterschiedlichem Durchmesser ist bei Bedarf eine einfache Anpassung an verschiedene Durchmesser der durchzuführenden Stange möglich.

In einer Weiterbildung der Erfindung ist die stangenmontierbare Halterung als Halterung für eine sanitäre Handbrause eingerichtet, wozu ihr Haltekörper zum verschieblichen Anbringen an einer Handbrausenstange eingerichtet ist.

In einer Ausgestaltung der Erfindung umfasst der Haltekörper ein an der Handbrausenstange montierbares Stangenhalteteil, ein Brausenhalteteil zum Halten der Handbrause und eine Drehkopplung, durch die das Brausenhalteteil an das Stangenhalteteil relativ zu diesem mindestens in einer ersten Drehrichtung, optional zusätzlich in einer der ersten entgegengesetzten zweiten Drehrichtung, verdrehbar gekoppelt ist. Die Drehkopplung umfasst eine weitere Schlingfedereinheit, die sich unter Bereitstellung einer Verdrehwiderstandskraft über mehr als 180° um einen am Stangenhalteteil ausgebildeten Kopplungsstutzen herumschlingt und mit dem Brausenhalteteil drehgekoppelt ist.

Diese spezifische Drehkopplung realisiert eine funktionell vorteilhafte, verdrehbare Anbindung des Brausenhalteteils an das Stangenhalteteil in konstruktiv einfacher Weise. Der Fertigungsaufwand für den Kopplungsstutzen am Stangenhalteteil und für die weitere Schlingfedereinheit lässt sich gering halten, und durch die sich über mehr als 180° um den Kopplungsstutzen herumschlingende weitere Schlingfedereinheit kann die Verdrehwiderstandskraft, d.h. die Kraft, welche die Drehkopplung mittels der weiteren Schlingfedereinheit einem Verdrehen des Brausenhalteteils am Stangenhalteteil entgegensetzt, in einer gewünschten Weise bzw. Größe bereitgestellt werden.

Analog wie oben zur Schlingfedereinheit für die Klemmeinheit erwähnt, bestehen wiederum komfortabel viele Freiheitsgrade für die Einstellung einer im jeweiligen Anwendungsfall gewünschten Größe bzw. Stärke der Verdrehwiderstandskraft. Dies betrifft wie bereits erwähnt unter anderem die Querschnittsdicke und Querschnittsform eines für die weitere Schlingfedereinheit verwendeten Federdrahtmaterials, den Wicklungsdurchmesser und die Windungszahl der sich um den Kopplungsstutzen herumschlingenden weiteren Schlingfedereinheit, wobei auch hier die weitere Schlingfedereinheitje nach Bedarf aus einer einzigen Schlingfeder oder aus mehreren, hier vorzugsweise in einer Längsachsenrichtung des Kopplungsstutzens nebeneinander angeordneten Schlingfedern bestehen kann, wobei sich in letzterem Fall jede Schlingfeder um mehr als 180° um den Kopplungsstutzen herumschlingen kann oder sich alternativ eine, mehrere oder alle Schlingfedern um höchstens 180° um den Kopplungsstutzen derart herumschlingen, dass sich die von den mehreren Schlingfedern gebildete weitere Schlingfedereinheit über insgesamt mehr als 180° um den Kopplungsstutzen herumschlingt.

Je nach Anwendungsfall kann durch entsprechende Ausführung der weiteren Schlingfedereinheit die Drehkopplung so realisiert sein, dass sie das Verdrehen des Brausenhalteteils gegenüber dem Stangenhalteteil nur in der ersten Drehrichtung oder alternativ auch in der entgegengesetzten zweiten Drehrichtung zulässt, wobei in letzterem Fall wiederum je nach Bedarf die weitere Schlingfedereinheit so ausgeführt sein kann, dass sich für beide Drehrichtungen eine annähernd gleich große Verdrehwiderstandskraft oder alternativ für die eine Drehrichtung eine höhere Verdrehwiderstandskraft als für die andere Drehrichtung ergibt. Dies beinhaltet insbesondere auch den häufig gewünschten Anwendungsfall, dass sich das Brausenhalteteil in der einen Richtung relativ leichtgängig und in der anderen Richtung demgegenüber nur schwergängiger verdrehen lässt, d.h. die Verdrehwiderstandskraft oder synonym das Torsionsmoment wird in diesem Fall von der weiteren Schlingfedereinheit für die beiden Drehrichtungen in deutlich unterschiedlicher Größe bzw. Stärke bereitgestellt.

In einer Weiterbildung der Erfindung ist die weitere Schlingfedereinheit von einer sich zwischen einem ersten und einem zweiten Federende über mehr als 360° um den Kopplungsstutzen herumschlingenden Schlingfeder gebildet, die nur an einem ihrer beiden Enden in beiden Drehrichtungen drehfest mit dem Brausenhalteteil gekoppelt ist oder alternativ am einen Ende nur in der ersten Drehrichtung und am anderen Ende nur in der zweiten Drehrichtung mit dem Brausenhalteteil gekoppelt ist. Dies stellt auf die jeweiligen Anforderungen angepasste, vorteilhafte Realisierungen der Ankopplung der weiteren Schlingfedereinheit an das Brausenhalteteil dar.

In der Variante, bei der das eine Federende in beiden Drehrichtungen drehfest mit dem Brausenhalteteil gekoppelt ist, liegt das andere Federende vorzugsweise frei, und die Schlingfeder wird beim Verdrehen des Brausenhalteteils in der einen Richtung sich etwas zuziehend mitgenommen, beim Verdrehen in der anderen Richtung wird sie sich etwas aufweitend mitgenommen. Je nach Ausführung des Herumschlingens der Schlingfeder um den Kopplungsstutzen dreht sich die Schlingfeder insgesamt mit dem Brausenhalteteil mit, wobei sie in der Regel in der zuziehenden Drehrichtung eine höhere Verdrehwiderstandskraft bereitstellt als in der aufweitenden Drehrichtung, was wie oben erwähnt in vielen Fällen gewünscht ist. Alternativ kann die Ausführung so gewählt sein, dass die Schlingfeder in der Zuziehrichtung blockiert, sei es weil sie mit ihrem anderen Federende am Stangenhalteteil fixiert ist, sei es, dass sie durch Reibschluss mit dem Kopplungsstutzen blockiert, obwohl ihr anderes Federende frei liegt.

Wenn die Schlingfeder an beiden Enden in der jeweils einen bzw. anderen Drehrichtung mit dem Brausenhalteteil gekoppelt ist, kann sie in beiden Drehrichtungen symmetrisch mit dem Brausenhalteteil mitgenommen werden, z.B. unter jeweils geringfügigem Aufweiten, wodurch sich bei Bedarf eine Variante mit gleich großem Torsionsmoment, d.h. gleich großer Verdrehwiderstandskraft, für beide Drehrichtungen realisieren lässt.

In einer Weiterbildung der Erfindung weist das Stangenhalteteil die Stangendurchführungsöffnung auf, und die weitere Schlingfedereinheit für die Drehkopplung von Brausenhalteteil und Stangenhalteteil ist mit einer senkrecht zu einer Längsachsenrichtung der Stangendurchführungsöffnung verlaufenden Federlängsachse angeordnet. Dies ermöglicht einen in vielen Fällen vorteilhaften konstruktiven Aufbau der Halterung.

In einer Weiterbildung der Erfindung sind die Aspekte der spezifischen Drehkopplung zwischen Brausenhalteteil und Stangenhalteteil und der spezifischen Klemmeinheit für das lösbare Klemmen des Haltekörpers an der Stange miteinander kombiniert, d.h. die Halterung weist die Merkmale sowohl eines der Ansprüche 1 bis 7 als auch die Merkmale eines der Ansprüche 8 bis 10 auf. Entsprechend sind in dieser erfindungsgemäßen Halterung die oben zu diesen Aspekten erwähnten funktionellen und konstruktiven Eigenschaften und Vorteile kombiniert. Auch diese kombinierte Halterung lässt sich vergleichsweise kompakt bauen. Sie lässt sich zuverlässig an einer Stange festklemmen und durch nutzerbetätigtes Lösen der Klemmung entlang der Stange verschieben. Das Brausenhalteteil kann, gegebenenfalls mit daran gehaltenem Handbrausenkörper, bequem gegenüber dem Stangenhalteteil verdreht werden, mit dem die Halterung an der Stange festgeklemmt gehalten wird.

Vorteilhafte Ausführungsformen der Erfindung sind in den Zeichnungen dargestellt. Diese und weitere Ausführungsformen der Erfindung werden nachfolgend näher erläutert. Hierbei zeigen:
- Fig. 1: eine Seitenansicht einer an einer Stange verschieblich montierten Halterung mit Schlingfedereinheit, Druckknopf-Bedieneinheit und diese koppelnder Druckknopf-Kulissenführung,
- Fig. 2: eine Draufsicht von oben auf die stangenmontierte Halterung,
- Fig. 3: eine Schnittansicht längs einer Linie III-III in Fig. 1,
- Fig. 4: eine Schnittansicht längs einer Linie IV-IV in Fig. 2,
- Fig. 5: eine perspektivische Seitenansicht der stangenmontierten Halterung mit abgenommener Druckknopf-Bedieneinheit,
- Fig. 6: eine perspektivische Seitenansicht von oben auf die stangenmontierte Halterung in teilweise weggeschnittener Darstellung,
- Fig. 7: die Seitenansicht von Fig. 1 für eine Variante mit modifizierter Schlingfedereinheit,
- Fig. 8: eine Schnittansicht längs einer Linie VIII-VIII in Fig. 7,
- Fig. 9: die perspektivische Seitenansicht von Fig. 5 für die Variante von Fig. 7,
- Fig. 10: eine perspektivische Seitenansicht von oben für eine Variante der Halterung mit Drehknopf-Bedieneinheit,
- Fig. 11: eine perspektivische Seitenansicht einer an einer Handbrausenstange montierten Halterung mit Stangenhalteteil und demgegenüber über eine Schlingfeder-Drehkopplung verdrehbarem Brausenhalteteil für eine sanitäre Handbrause,
- Fig. 12: eine perspektivische Seitenansicht der Halterung von Fig. 11 bei abgenommenem Brausenhalteteil für eine Variante mit Runddraht-Schlingfedereinheit,
- Fig. 13: die perspektivische Seitenansicht von Fig. 12 für eine Variante mit Vierkantdraht-Schlingfedereinheit und
- Fig. 14: die Ansicht von Fig. 6 für eine Variante mit Kniehebelkopplung von Druccknopf-Bedieneinheit und Schlingfedereinheit.

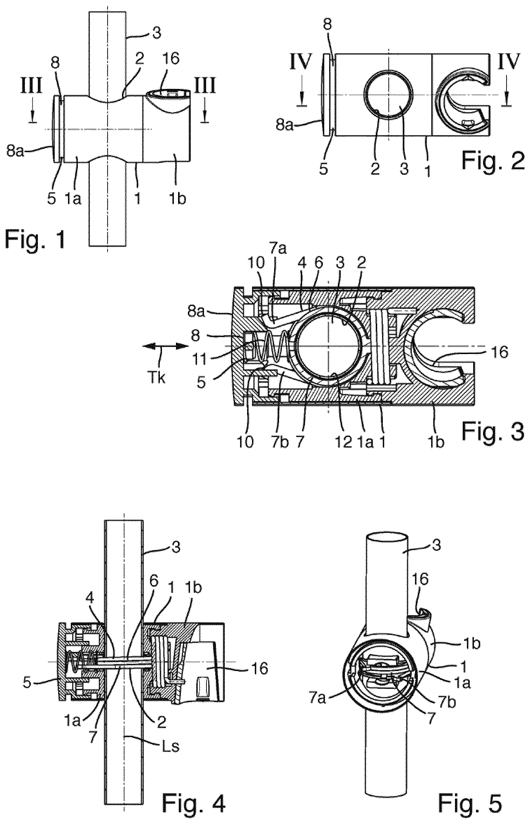

Die in den Fig. 1 bis 10 und 14 veranschaulichte, stangenmontierbare Halterung beinhaltet einen Haltekörper 1, der zum verschieblichen Anbringen an einer Stange eingerichtet ist und eine Stangendurchführungsöffnung 2 für die Stange aufweist. Die Halterung ist hierbei in einem an einer Stange 3 montierten Zustand gezeigt, bei der es sich beispielsweise um eine Handbrausenstange handeln kann, d.h. eine zum Anordnen einer sanitären Handbrause bestimmten Stange. Des Weiteren beinhaltet die Halterung eine zwischen einer Klemmposition und einer Freigabeposition bewegliche Klemmeinheit 4, die bei an der Stange 3 angebrachtem Haltekörper 1 in der Freigabeposition eine Verschiebung des Haltekörpers 1 entlang der Stange 3 freigibt und in der Klemmposition eine Klemmkraft ausübt, die eine Verschiebung des Haltekörpers 1 entlang der Stange 3 blockiert. Zum nutzerbetätigten Bewegen der Klemmeinheit 4 zwischen ihrer Klemmposition und ihrer Freigabeposition weist die Halterung eine Bedieneinheit 5 auf.

Die Klemmeinheit 4 ist von einer sich um die Stangendurchführungsöffnung 2 herumschlingenden Schlingfedereinheit 6 gebildet. In der Ausführung gemäß den Fig. 1 bis 6 und 14 beinhaltet die Schlingfedereinheit 6 eine Schlingfeder 7, die sich über mehr als 360° um die Stangendurchführungsöffnung 2 herumschlingt, wobei die Schlingfeder 7 durch die Bedieneinheit 5 zwischen einem die Klemmposition der Klemmeinheit 4 bereitstellenden, verengenden Zustand und einem die Freigabeposition der Klemmeinheit 4 bereitstellenden, aufweitenden Zustand bewegbar ist.

Die Schlingfeder 7 schlingt sich folglich um mehr als eine ganze Wicklung bzw. Windung um die Stangendurchführungsöffnung 2 herum, wodurch die Klemmkraft entlang des gesamten Umfangs der Stangendurchführungsöffnung 2 und damit entlang des gesamten Umfangs der durchgeführten Stange 3 wirken kann. Optional schlingt sich die Schlingfeder 7 über mehr als 720°, d.h. über mehr als zwei Wicklungen/Windungen, um die Stangendurchführungsöffnung 2 herum. In den gezeigten Beispielen der Fig. 1 bis 6 und 14 schlingt sie sich über mehr als zwei und etwas weniger als drei volle Windungen/Wicklungen um die Stangendurchführungsöffnung 2 herum. Mit größerem Umschlingungswinkel bzw. größerer Anzahl von Wicklungen/Windungen der Schlingfeder 7 um die Stangendurchführungsöffnung 2 herum lässt sich bei Bedarf die Wirkkontaktfläche für die Klemmkraft erhöhen bzw. ein schwächeres Federmaterial für die Schlingfeder 7 zur Erzielung einer gleichen, geforderten Klemmkraft verwenden.

Die Schlingfeder endet mit zwei Enden 7a, 7b, die sich in entsprechenden Ausführungen, wie im gezeigten Beispiel, auf einer bezüglich der Stangendurchführungsöffnung 2 gleichen Seite befinden, in den Fig. 1 bis 4 der linken Seite der Stangendurchführungsöffnung 2.

In entsprechenden Ausführungen ist wie in den gezeigten Beispielen der Fig. 1 bis 10 und 14 der verengende Zustand der Schlingfedereinheit 6 bzw. der Schlingfeder 7 ein Ausgangszustand derselben, in den die Schlingfeder 7 vom aufweitenden Zustand eigenelastisch selbsttätig zurückkehrt.

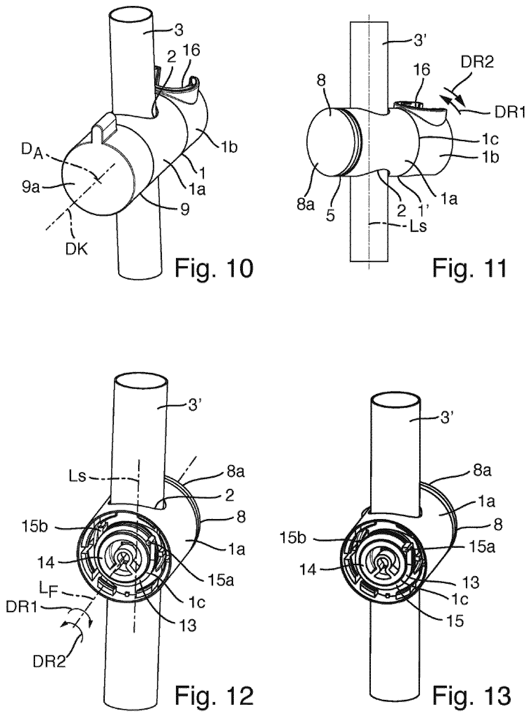

In entsprechenden Ausführungsformen ist die Bedieneinheit 5 wie in den gezeigten Beispielen der Fig. 1 bis 9 und 14 eine Druckknopf-Bedieneinheit bzw. kurz Druckknopfeinheit 8 mit einem auf die Schlingfedereinheit 6 wirkenden Druckknopf 8a. In alternativen Ausführungsformen ist die Bedieneinheit 5 wie im gezeigten Beispiel von Fig. 10 eine Drehknopf-Bedieneinheit bzw. kurz Drehknopfeinheit 9 mit einem auf die Schlingfedereinheit 6 wirkenden Drehknopf 9a.

Bei der Druckknopfvariante ist der Druckknopf 8a in entsprechenden Ausführungen wie beim gezeigten Beispiel mit einer bezüglich der Schlingfeder 7 radialen Hauptrichtungskomponente Tk beweglich angeordnet. Speziell kann bei Bedarf, wie im gezeigten Beispiel, die transversale Bewegung des Druckknopfs 8a parallel zur Radialrichtung der Schlingfeder 7 sein, die ihrerseits senkrecht zur Längsmittenachse der schraubenfederförmigen Schlingfeder 7 ist.

In der Ausführung gemäß den Fig. 1 bis 9 übersetzt eine Druckknopf-Kulissenführung 10 als Kopplungsmittel zwischen der Druckknopfeinheit 8 und der Schlingfedereinheit 6 die transversale Bewegung des Druckknopfs 8a in eine Spreizbewegung der Enden 7a, 7b der Schlingfeder 7, wobei die aufspreizende Bewegung der Schlingfederenden 7a, 7b mit einer bezüglich der Schlingfeder 7 tangentialen Hauptrichtungskomponente erfolgt. Dabei ist die Tangentialrichtung senkrecht zur Radialrichtung und zur Längsmittenachse der Schlingfeder 7. Die Druckknopf-Kulissenführung 10 kann hierzu beispielsweise eine Schrägflächen-Kulissenbahn am Druckknopf 8a beinhalten, an der die Schlingfederenden 7a, 7b entlanggleiten.

Optional umfasst die Druckknopfeinheit 8 des Weiteren eine Rückstellfeder 11, um das Rückstellen des Druckknopfs 8a in seine Ausgangsstellung zu bewirken bzw. zu unterstützen. Im gezeigten Beispiel wird der Druckknopf 8a vom Benutzer in Richtung in den Haltekörper 1 hinein gedrückt, wodurch er über die Druckknopf-Kulissenführung 10 die Schlingfeder 7 aufspreizt, die dadurch von ihrem den Haltekörper 1 an der Stange 3 festklemmenden, verengenden Zustand in ihren aufweitenden Zustand versetzt wird, in welcher sie das Verschieben des Haltekörpers 1 längs der Stange 3 freigibt. Durch Loslassen gelangt die Drucktaste 8a unter der Wirkung der Rückstellfeder 11 und eventuell einer unterstützenden Wirkung der eigenelastisch in ihren verengenden Ausgangszustand vorgespannten Schlingfeder 7 in die Ausgangsstellung zurück, so dass die Schlingfeder 7 wieder ihre verengende Klemmposition einnehmen kann.

In der Drehknopfvariante gemäß Fig. 10 ist der Drehknopf 9a um eine Drehachse D_{A} drehbeweglich angeordnet, die eine bezüglich der Schlingfeder 7 radiale Hauptrichtungskomponente Dk besitzt. Vorzugsweise ist die Richtung der Drehachse D_{A} parallel zur Radialrichtung der Schlingfeder 7. Die Richtung der Drehachse D_{A} bei der Drehknopfvariante kann beispielsweise parallel zur transversalen Bewegungsrichtung des Druckknopfs 8a der Druckknopfvariante sein. Eine Drehknopf-Kulissenführung übersetzt die Drehbewegung des Drehknopfs 9a in eine Spreizbewegung der Schlingfederenden 7a, 7b, durch die sich letztere mit einer bezüglich der Schlingfeder 7 tangentialen Hauptrichtungskomponente aufspreizen, d.h. die Schlingfeder-Spreizbewegung entspricht der oben zur Druckknopfvariante erläuterten Spreizbewegung der Schlingfeder 7. Für die Drehknopf-Kulissenführung ist eine beliebige geeignete Realisierung verwendbar, wie dies dem Fachmann an sich geläufig ist, was daher hier nicht weiter gezeigt und erläutert werden braucht. Beispielsweise kann der Drehknopf 9a hierfür eine sich in Umfangsrichtung erstreckende Schrägflächen-Kulissenbahn aufweisen, längs der die Schlingfederenden 7a, 7b entlanggleiten.

In den oben erwähnten Ausführungen wirkt die Bedieneinheit 5 jeweils auf beide Enden 7a, 7b der Schlingfeder 7, um diese in ihren aufweitenden, aufgespreizten Zustand zu versetzen. In alternativen Ausführungen wirkt die Bedieneinheit 5 nur auf ein Ende der Schlingfeder 7, während das andere Schenkelfederende stationär z.B. an einem zugehörigen Befestigungspunkt des Haltekörpers 1 gehalten ist. Bei diesen alternativen Ausführungen können die beiden Schenkelfederenden 7a, 7b auf einer gleichen Seite oder auf verschiedenen Seiten der Stangendurchführungsöffnung 2 liegen.

In entsprechenden Ausführungsformen beinhaltet die Halterung wie in den gezeigten Beispielen der Fig. 1 bis 10 und 14 eine die Stangendurchführungsöffnung 2 definierende, offene, elastische Klemmhülse 12, um welche sich die Schlingfedereinheit 6 bzw. die Schlingfeder 7 herumschlingt. Da die Klemmhülse 12 offen ist, d.h. einen umfangsseitigen Spalt 12a aufweist, kann sie der verengenden bzw. aufweitenden Bewegung der Schlingfedereinheit 6 um die Stangendurchführungsöffnung 2 herum folgen, wenn sich die um die Klemmhülse 12 herumschlingende Schlingfedereinheit 6 bzw. Schlingfeder 7 klemmend verengt bzw. die Klemmung lösend aufweitet. In diesem Fall überträgt die Klemmhülse 12 die Klemmkraft der Schlingfedereinheit 6 auf die Stange 3 in der Stangendurchführungsöffnung 2. Die Schlingfedereinheit 6 braucht dann nicht in Berührkontakt mit der Stange 3 kommen. Die Klemmhülse 12 besteht aus einem geeigneten elastischen Kunststoff- oder Metallmaterial und legt sich mit Berührkontakt um die Stange 3. In alternativen Ausführungen umschlingt die Schlingfedereinheit 6 direkt mit Berührkontakt die Stange 3 ohne die zwischengefügte Klemmhülse 12.

In entsprechenden Ausführungen besitzt der Haltekörper 1 wie gezeigt eine zylindrische Form mit zu einer Längsachsenrichtung L_{S} der Stangendurchführungsöffnung 2 senkrechter Zylinderlängsachse.

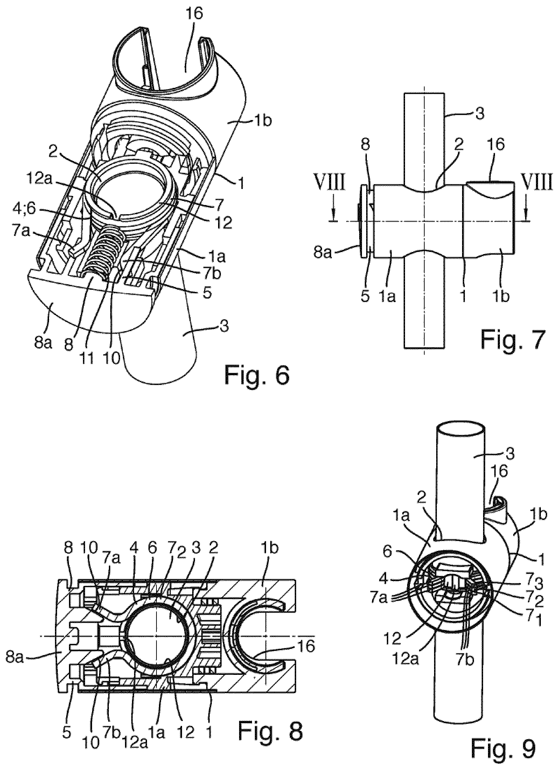

Die Fig. 7 bis 9 veranschaulichen eine stangenmontierbare Halterung, die in einer beliebigen der oben zu den Fig. 1 bis 6 und 14 erläuterten Ausführungsformen realisierbar ist, wobei als einziger Unterschied eine alternative Ausführung der Schlingfedereinheit 6 verwendet ist. Im Übrigen kann auf die obigen Erläuterungen zu den entsprechenden Ausführungsformen verwiesen werden, die für die Ausführungsvariante der Fig. 7 bis 9 entsprechend gelten.

Speziell umfasst die Schlingfedereinheit 6 im Ausführungsbeispiel der Fig. 7 bis 9 mehrere, in einer Längsachsenrichtung L_{S} der Stangendurchführungsöffnung 2 nebeneinander angeordnete Schlingfedern 7₁, 7₂, 7₃, die sich jeweils über mehr als 180° um die Stangendurchführungsöffnung 2 herumschlingen, wobei die jeweilige Schlingfeder 7₁, 7₂, 7₃ durch die Bedieneinheit 5 zwischen einem die Klemmposition der Klemmeinheit 4 bereitstellenden, verengenden Zustand und einem die Freigabeposition der Klemmeinheit 4 bereitstellenden, aufweitenden Zustand bewegbar ist. Vorzugsweise liegen wie im gezeigten Beispiel die mehreren Schlingfedern 7₁, 7₂, 7₃ mit Berührkontakt gegeneinander an und bilden auf diese Weise ein Schlingfederpaket. Im gezeigten Beispiel besteht das Schlingfederpaket aus den drei Schlingfedern 7₁, 7₂, 7₃, in alternativen Ausführungen aus zwei oder vier oder mehr einzelnen Schlingfedern. Eine solche Realisierung der Schlingfedereinheit 6 aus mehreren Schlingfedern kann die Ausfallsicherheit erhöhen, indem bei Bruch einer der Schlingfedern die übrigen, noch intakten Schlingfedern die Klemmfunktion übernehmen bzw. weiter gewährleisten können.

Im gezeigten Beispiel schlingt sich jede der Schlingfedern 7₁, 7₂, 7₃ über einen Winkel von ca. 310° bis 320° um die Stangendurchführungsöffnung 2 herum, in alternativen Ausführungen über einen Winkel zwischen 180° und 310° oder über einen Winkel von jeweils mehr als 320°. Insbesondere kann sich in alternativen Ausführungen mindestens eine der Schlingfedern über mehr als 360° um die Stangendurchführungsöffnung 2 herumschlingen. Im gezeigten Beispiel liegen die Schlingfedern 7₁, 7₂, 7₃ jeweils mit ihren beiden Federenden 7a, 7b synchron, d.h. in Umfangsrichtung gleichlagig, nebeneinander. Dies vereinfacht in der Regel das Aufspreizen der Schlingfedern 7₁, 7₂, 7₃ durch die Bedieneinheit 5. In alternativen Ausführungen sind mindestens zwei der Schlingfedern mit in Umfangsrichtung zueinander versetzten Federenden angeordnet. Dies kann bei Bedarf z.B. dafür genutzt werden, die Stangendurchführungsöffnung 2 durch die Schlingfedereinheit 6 entlang des gesamten Öffnungsumfangs zu umschlingen, auch wenn jede der die Schlingfedereinheit 6 bzw. das Schlingfederpaket bildenden Schlingfedern sich jeweils nur um weniger als 360° um die Stangendurchführungsöffnung 2 herumschlingt.

Das nutzerbetätigte Bewegen der von dieser Schlingfedereinheit 6 durch die mehreren einzelnen Schlingfedern 7₁, 7₂, 7₃ gebildeten Klemmeinheit 4 zwischen ihrer Klemmposition und ihrer Freigabeposition erfolgt durch die Bedieneinheit 5 in der Druckknopfvariante oder der Drehknopfvariante in gleicher Weise wie oben zu der durch die Schlingfeder 7 gebildeten Schlingfedereinheit 6 erläutert. Durch Drücken des Druccknopfs 8a der Druckknopfeinheit 8 oder Drehen des Drehknopfs 9a der Drehknopfeinheit 9 werden die Schlingfedern 7₁, 7₂, 7₃ gemeinsam von ihrem verengenden Zustand in ihren aufweitenden Zustand bewegt, wobei der verengende Zustand vorzugsweise wiederum ein Ausgangszustand der jeweiligen Schlingfeder 7₁, 7₂, 7₃ ist, in den sie vom aufweitenden Zustand eigenelastisch selbsttätig zurückkehrt. Durch Loslassen des Druckknopfs 8a bzw. Zurückdrehen oder Weiterdrehen des Drehknopfs 9a kehrt in diesem Fall das Schlingfederpaket der Schlingfedern 7₁, 7₂, 7₃ wieder in den verengenden Klemmzustand zurück.

Die Fig. 11 bis 13 veranschaulichen eine stangenmontierbare Halterung für eine sanitäre Handbrause, wobei die Halterung einen Haltekörper 1' zum Anbringen an einer Handbrausenstange 3' aufweist und die Fig. 11 bis 13 die Halterung bzw. den Haltekörper 1' im montierten Zustand an der Handbrausenstange 3' zeigen. Der Haltekörper 1' beinhaltet ein an der Handbrausenstange 3' montierbares Stangenhalteteil 1a, ein Brausenhalteteil 1b zum Halten der Handbrause und eine Drehkopplung 1c, durch die das Brausenhalteteil 1b an das Stangenhalteteil 1a relativ zu diesem in einer ersten Drehrichtung DR1 und/oder in einer der ersten entgegengesetzten zweiten Drehrichtung DR2 verdrehbar gekoppelt ist. Bei den beiden entgegengesetzten Drehrichtungen DR1, DR2 kann es sich insbesondere um Drehungen im Uhrzeigersinn bzw. Gegenuhrzeigersinn um eine Drehachse handeln, die bei an der Stange 3' montierter Halterung 1' senkrecht zu einer Längsachse der Stange 3' verläuft.

In den Fig. 12 und 13 ist bei weggelassenem Brausenhalteteil 1b zu erkennen, dass die Drehkopplung 1c eine Schlingfedereinheit 13 beinhaltet, die sich unter Bereitstellung einer Verdrehwiderstandskraft für die Verdrehbewegung des Brausenhalteteils 1b relativ zum Stangenhalteteil 1a über mehr als 180° um einen am Stangenhalteteil 1a ausgebildeten Kopplungsstutzen 14 herumschlingt und mit dem Brausenhalteteil 1b drehgekoppelt ist. Im Übrigen ist die Drehkopplung 1c in einer üblichen und daher hier nicht weiter zu erläuternden Weise so ausgeführt, dass mit ihr das Brausenhalteteil 1b drehbeweglich am Stangenhalteteil 1a gehalten ist. Speziell kann die Drehkopplung 1c so ausgeführt sein, dass die Verdrehung des Brausenhalteteils 1b gegenüber dem Stangenhalteteil 1a je nach Bedarf stufenlos oder alternativ mit überfahrbaren Raststufen erfolgen kann. Die Verdrehwiderstandskraft setzt einer vom Benutzer auf das Brausenhalteteil 1b ausgeübten Verdrehbewegung einen erwünschten, von ihm überwindbaren Widerstand entgegen und sichert das Brausenhalteteil in seiner jeweils momentanen Drehlage gegen ein unerwünschtes selbsttätiges Verdrehen z.B. aufgrund des Gewichts einer vom Brausenhalteteil gehaltenen Handbrause.

In vorteilhaften Ausführungen ist die Schlingfedereinheit 13 wie im gezeigten Beispiel von einer sich zwischen einem ersten Federende 15a und einem zweiten Federende 15b über mehr als 360° um den Kupplungsstutzen 14 herumschlingenden Schlingfeder 15 gebildet. Je nach Bedarf und Anwendungsfall ist die Schlingfeder 15 nur an einem ihrer beiden Federenden 15a, 15b in beiden Drehrichtungen DR1, DR2 drehfest mit dem Brausenhalteteil 1b gekoppelt oder alternativ am ersten Federende 15a nur in der einen und am zweiten Federenede 15b nur in der anderen der beiden entgegengesetzten Drehrichtungen drehfest mit dem Brausenhalteteil 1b gekoppelt. Bei der in Fig. 12 gezeigten Realisierung ist für die Schlingfeder 15 ein Runddrahtmaterial verwendet. Die in Fig. 13 gezeigte Ausführungsvariante unterscheidet sich von derjenigen in Fig. 12 darin, dass für die Schlingfeder 15 ein Vierkant-Drahtmaterial verwendet ist.

In vorteilhaften Ausführungen weist das Stangenhalteteil 1a eine Stangendurchführungsöffnung 2' auf, und die Schlingfedereinheit 13 ist mit einer senkrecht zu einer Längsachsenrichtung L_{S} der Stangendurchführungsöffnung 2' verlaufenden Federlängsachse L_{F} angeordnet. Die Federlängsachse L_{F} der Schlingfedereinheit 13 fällt in vorteilhaften Ausführungen der Halterung mit der Drehachse zusammen, um die sich das Brausenhalteteil 1b in der ersten und/oder der zweiten Drehrichtung DR1, DR2 relativ zum Stangenhalteteil 1a verdrehen lässt, oder verläuft parallel versetzt zu dieser.

Im gezeigten Beispiel ist die Schlingfeder 15 nur am ersten Federende 15a, das hierfür axial abgewinkelt ist, in beiden Drehrichtungen DR1, DR2 drehfest mit dem Brausenhalteteil 1b gekoppelt, während ihr anderes, zweites Federende 15b frei liegt. Zur drehfesten Kopplung des ersten Federendes 15a besitzt das Brausenhalteteil 1b eine herkömmliche und daher hier nicht weiter gezeigte Aufnahme, in die das erste Federende 15a so eingefügt ist, dass es von der Drehbewegung des Brausenhalteteils 1b in beiden Drehrichtungen DR1, DR 2 mitgenommen wird. In der einen der beiden Drehrichtungen wird die Schlingfeder 15 dadurch sich etwas zuziehend mitgenommen, beim Verdrehen in der entgegengesetzten Richtung wird sie sich etwas aufweitend mitgenommen. Somit legt sie sich in der zuziehenden Drehrichtung etwas mehr gegen den von ihr umschlungenen Kopplungsstutzen 14 an als in der aufweitenden Drehrichtung.

Durch die Bewegung der Schlingfeder 15 in der zuziehenden Drehrichtung ergibt sich somit in der Regel im Vergleich mit der aufweitenden Drehrichtung ein etwas höherer Reibungswiderstand für die Drehung der Schlingfeder 15 um den Kopplungsstutzen 14 und ein etwas höheres Torsionsmoment der Schlingfeder 15, was insgesamt zu einer etwas höheren Verdrehwiderstandskraft der Schlingfeder 15 auf das Brausenhalteteil 1b im Vergleich zur Drehung der Schlingfeder 15 in der aufweitenden Drehrichtung führt. Dadurch ergibt sich eine in vielen Fällen wünschenswerte unsymmetrische Verdrehwiderstandskraft, die beim Verdrehen des Brausenhalteteils 1b in der einen Drehrichtung spürbar größer als beim Verdrehen desselben in der anderen Drehrichtung ist.

Je nach Bedarf und Anwendungsfall ist die Drehkopplung 1c so ausgeführt, dass sich die Schlingfedereinheit 13 bzw. die Schlingfeder 15 am Kopplungsstutzen 14 nicht blockierend zuzieht bzw. festzieht, wenn sie in der zuziehenden Drehrichtung gedreht wird, sondern sich nach kurzem Zuziehweg mit dem Brausenhalteteil 1b mitdreht. In alternativen Ausführungen kann die Schlingfedereinheit 13 bzw. die Schlingfeder 15 in der Zuziehrichtung blockieren, wodurch sich dann das Brausenhalteteil 1b nicht mehr weiter in der zuziehenden Drehrichtung verdrehen lässt.

In nicht gezeigten, alternativen Ausführungen nimmt das Brausenhalteteil 1b die Schlingfedereinheit 13 bzw. die Schlingfeder 15 am einen Federende in der einen Drehrichtung und am anderen Federende in der anderen Drehrichtung mit, wozu dann die beiden Federenden 15a, 15b in jeweils einer der beiden entgegengesetzten Drehrichtungen DR1, DR2 mit dem Brausenhalteteil 1b drehgekoppelt sind, während sie in der anderen Drehrichtung frei liegen. Dies kann z.B. durch entsprechende Anschläge am Brausenhalteteil 1b realisiert sein, die in jeweils nur einer der beiden Drehrichtungen DR1, DR2 gegen das zugewandte Federende 15a, 15b anschlagen und dieses in der betreffenden Drehrichtung mitnehmen.

Die zu den Fig. 11 bis 13 erläuterte Halterung mit dem Haltekörper 1' ist in entsprechenden Ausführungen zum verschiebbaren oder alternativ nicht verschiebbaren Anbringen an der Stange 3' ausgeführt. In der Realisierung mit verschieblich an der Stange 3' anbringbarem Haltekörper 1' kann der Haltekörper 1' identisch mit dem Haltekörper 1 der zu den Fig. 1 bis 10 und 14 erläuterten Halterung sein. Der Haltekörper 1' beinhaltet dann dementsprechend die Klemmeinheit 4 in Form der Schlingfedereinheit 6 sowie die Bedieneinheit 5. Anders herum gesagt, beinhaltet die Halterung 1 in diesem Fall das Stangenhalteteil 1a, das Brausenhalteteil 1b und die Drehkopplung 1c mit der zugehörigen Schlingfedereinheit 13. In diesem Fall weist das Stangenhalteteil 1a die Stangendurchführungsöffnung 2 auf, durch die sich im montierten Zustand der Halterung die Stange 3 hindurch erstreckt, entlang der die Halterung bzw. der Haltekörper 1 verschoben werden kann.

Mit anderen Worten sind in dieser vorteilhaften Realisierung der erfindungsgemäßen Halterung der Aspekt der Längsverschieblichkeit der Halterung bzw. ihres Haltekörpers entlang einer Stange und ihrer lösbaren Festlegbarkeit an der Stange durch die zugehörige, festklemmende Schlingfedereinheit 6 und der Aspekt der Halterung einer sanitären Handbrause an einer Stange mittels des Haltekörpers mit Stangenhalteteil und demgegenüber verdrehbarem Brausenhalteteil unter Verwendung der die zugehörige Schlingfedereinheit 13 aufweisenden Drehkopplung kombiniert verwirklicht. In den Fig. 1 bis 14 ist diese optionale Kombinationsrealisierung der Erfindung dadurch repräsentiert, dass diejenigen Komponenten, die identisch realisierbar sind oder jedenfalls funktionell äquivalent sind, mit gleichen Bezugszeichen markiert sind, sowohl für die Ausführungsvarianten gemäß den Fig. 1 bis 10 und 14 als auch für die Ausführungsvarianten gemäß den Fig. 11 bis 13.

In entsprechenden Ausführungen dieser Kombinationsvariante ist wie gezeigt die Bedieneinheit 5 am Stangenhalteteil 1a angeordnet, in alternativen Ausführungen am Brausenhalteteil 1b. Speziell sind in entsprechenden Ausführungen wie gezeigt die Bedieneinheit 5 und das Brausenhalteteil 1b auf bezüglich der Stangendurchführungsöffnung 2 gegenüberliegenden Seiten des Haltekörpers 1, 1' angeordnet, was für viele Anwendungsfälle den Bedienkomfort für den Benutzer optimiert und einen kompakten Aufbau des Haltekörpers 1, 1' z.B. in einer zylindrischen Bauform begünstigt.

Zum Halten der Handbrause weist das Brausenhalteteil 1b ein geeignetes Handbrausen-Haltemittel auf, bei dem es sich in entsprechenden Ausführungen wie im gezeigten Beispiel um eine übliche konusförmige Handbrausenaufnahme 16 handeln kann. In diese Handbrausenaufnahme 16 kann die Handbrause bzw. speziell ein Handbrausenkörper z.B. mit einem Griffkörperabschnitt oder einem Anschlussabschnitt für einen wasserzuführenden Handbrausenschlauch vom breiteren Konusende her eingesetzt werden. Der mit der konusförmigen Handbrausenaufnahme 16 zusammenwirkende Abschnitt der Handbrause kann alternativ auch von einem korrespondierend konusförmigen Anschlussabschnitt eines Handbrausenschlauchs gebildet sein, an den ein Handbrausenkörper angeschlossen ist.

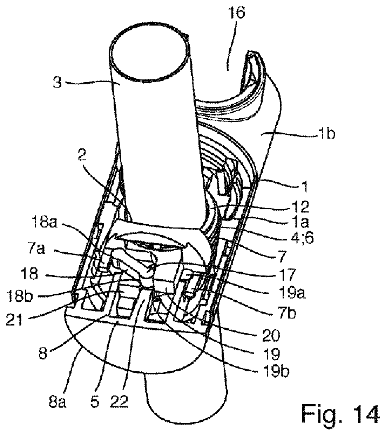

Fig. 14 veranschaulicht eine Variante der Halterung der Fig. 1 bis 9, die sich von dieser in der Ankopplung der Bedieneinheit 5 an die Schlingfedereinheit 6 unterscheidet. Anstelle der Drehknopf-Kulissenführung 10 wirkt bei der Variante von Fig. 14 die Bedieneinheit 5 über eine Kniehebelkopplung 17 auf die Federenden 7a, 7b der Schlingfeder 7, um die Schlingfeder 7 durch die Druckbewegung der Drucktaste 8a in gewünschter Weise aufzuspreizen. Dazu beinhaltet die Kniehebelkopplung 17 für jedes der beiden Federenden 7a, 7b je einen Kniehebelarm 18, 19, von denen jeder mit einem Endbereich 18a, 19a gegen das zugeordnete Federende 7a, 7b anliegt, während sie sich mit ihrem anderen Ende 18b, 19b an je einem zugeordneten Stützabschnitt 20, 21 des Haltekörpers 1 abstützen. Dabei sind die beiden Kniehebelarme 18, 19 an ihren zweiten Enden 18b, 19b unter Bildung eines zugehörigen Kniehebelgelenks drehbeweglich aneinander fixiert.

Ein an einer Innenseite des Druckknopfs 8a ausgebildeter Drucksteg 22 drückt gegen das Kniegelenk, d.h. gegen die beiden zweiten Enden 18b, 19b der beiden Kniehebelarme 18, 19, an, wenn der Druckknopf 8a vom Benutzer in Richtung in den Haltekörper 1 hinein gedrückt wird, wodurch sich die mit ihren Längsachsen schräg zur transversalen Betätigungsrichtung der Drucktaste 8a angeordneten Kniehebelarme 18, 19 mit ihren drehgekoppelten zweiten Enden 18b, 19b transversal mitbewegen, so dass die Kniehebelarme 18, 19 eine gegensinnige Verdrehung erfahren, durch welche die Schlingfeder 7 an ihren Enden 7a, 7b wie gewünscht aufgespreizt wird.

Nach Loslassen der Drucktaste 8a durch den Benutzer wird die Drucktaste 8a wieder in Richtung aus dem z.B. zylindrischen Haltekörper 1 heraus bewegt, wobei diese Rücckehrbewegung wiederum selbsttätig unter der Wirkung einer hier nicht dargestellten Rückstellfeder und/oder unter der Wirkung der in Richtung nicht aufgespreiztem Zustand ihrer Federenden 7a, 7b vorgespannten Schlingfeder 7 erfolgt.

Wie oben bereits kurz erwähnt, kann auch die Halterung gemäß Fig. 14 so ausgeführt sein, dass sie mit der Halterung gemäß den Fig. 11 bis 13 identisch ist bzw. zusätzlich deren Merkmale aufweist. Umgekehrt kann die Halterung der Fig. 11 bis 13 zusätzlich die Merkmale der Halterung von Fig. 14 aufweisen.

Wie die gezeigten und die oben erläuterten Ausführungsbeispiele deutlich machen, stellt die Erfindung eine stangenmontierbare Halterung zur Verfügung, die in sehr vorteilhafter Weise verschieblich und lösbar festklemmbar an einer Stange montiert werden kann und/oder sich dafür eignet, eine sanitäre Handbrause an einer Handbrausenstange anzubringen.

## Patentansprüche

1. Stangenmontierbare Halterung mit
- einem Haltekörper (1, 1'), der zum verschieblichen Anbringen an einer Stange (3, 3') eingerichtet ist und eine Stangendurchführungsöffnung (2, 2') für die Stange aufweist,
- einer zwischen einer Klemmposition und einer Freigabeposition beweglichen Klemmeinheit (4), die bei an der Stange angebrachtem Haltekörper in der Freigabeposition eine Verschiebung des Haltekörpers entlang der Stange freigibt und in der Klemmposition eine Klemmkraft ausübt, die eine Verschiebung des Haltekörpers entlang der Stange blockiert, und
- einer Bedieneinheit (5) zum nutzerbetätigten Bewegen der Klemmeinheit zwischen ihrer Klemmposition und ihrer Freigabeposition,
**dadurch gekennzeichnet, dass**
- die Klemmeinheit (4) von einer sich um die Stangendurchführungsöffnung herumschlingenden Schlingfedereinheit (6) gebildet ist, die mehrere, in einer Längsachsenrichtung (L_{S}) der Stangendurchführungsöffnung (2) nebeneinander angeordnete Schlingfedern (7₁, 7₂, 7₃), die sich jeweils über mehr als 180° um die Stangendurchführungsöffnung herumschlingen, wobei die jeweilige Schlingfeder (7₁, 7₂, 7₃) durch die Bedieneinheit (5) zwischen einem die Klemmposition der Klemmeinheit bereitstellenden, verengenden Zustand und einem die Freigabeposition der Klemmeinheit bereitstellenden, aufweitenden Zustand bewegbar ist und/oder
- die Klemmeinheit (4) von einer sich um die Stangendurchführungsöffnung herumschlingenden Schlingfedereinheit (6) gebildet ist, die eine Schlingfeder (7) umfasst, die sich über mehr als 360° um die Stangendurchführungsöffnung herumschlingt, wobei die Schlingfeder (7) durch die Bedieneinheit (5) zwischen einem die Klemmposition der Klemmeinheit bereitstellenden, verengenden Zustand und einem die Freigabeposition der Klemmeinheit bereitstellenden, aufweitenden Zustand bewegbar ist und die Bedieneinheit eine Druckknopfeinheit (8) mit einem auf die Schlingfedereinheit wirkenden Druckknopf (8a) oder eine Drehknopfeinheit (9) mit einem auf die Schlingfedereinheit wirkenden Drehknopf (9a) ist, wobei der Druckknopf mit einer bezüglich der jeweiligen Schlingfeder radialen Hauptrichtungskomponente (Tk) beweglich angeordnet ist und eine Druckknopf-Kniehebelkopplung (17) oder eine Druckknopf-Kulissenführung (10) vorgesehen ist, welche die Bewegung des Druckknopfs in eine Spreizbewegung der Enden der jeweiligen Schlingfeder mit einer bezüglich der jeweiligen Schlingfeder tangentialen Hauptrichtungskomponente übersetzt, oder wobei der Drehknopf um eine Drehachse (D_{A}) mit einer bezüglich der jeweiligen Schlingfeder radialen Hauptrichtungskomponente (Dk) beweglich angeordnet ist und eine Drehknopf-Kulissenführung vorgesehen ist, welche die Drehbewegung des Drehknopfs in eine Spreizbewegung der Enden der jeweiligen Schlingfeder mit einer bezüglich der jeweiligen Schlingfeder tangentialen Hauptrichtungskomponente übersetzt.

2. Stangenmontierbare Halterung nach Anspruch 1, weiter **dadurch gekennzeichnet, dass**
- die mehreren, in der Längsachsenrichtung der Stangendurchführungsöffnung nebeneinander angeordneten Schlingfedern ein Schlingfederpaket bildend mit Berührkontakt gegeneinander anliegen und/oder
- sich die sich über mehr als 360° um die Stangendurchführungsöffnung herumschlingende Schlingfeder über mehr als 720° um die Stangendurchführungsöffnung herumschlingt.

3. Stangenmontierbare Halterung nach Anspruch 1 oder 2, weiter **dadurch gekennzeichnet, dass** sich die beiden Enden (7a, 7b) der jeweiligen Schlingfeder auf einer bezüglich der Stangendurchführungsöffnung gleichen Seite befinden.

4. Stangenmontierbare Halterung nach einem der Ansprüche 1 bis 3, weiter **dadurch gekennzeichnet, dass** der verengende Zustand ein Ausgangszustand der jeweiligen Schlingfeder ist, in den die Schlingfeder vom aufweitenden Zustand eigenelastisch selbsttätig zurückkehrt.

5. Stangenmontierbare Halterung nach einem der Ansprüche 1 bis 4, weiter **gekennzeichnet durch** eine offene, elastische Klemmhülse (12), welche die Stangendurchführungsöffnung definiert und um welche sich die Schlingfedereinheit herumschlingt.

6. Stangenmontierbare Halterung nach einem der Ansprüche 1 bis 5, weiter **dadurch gekennzeichnet, dass** sie als Halterung für eine sanitäre Handbrause eingerichtet ist, wozu ihr Haltekörper (1, 1') zum verschieblichen Anbringen an einer Handbrausenstange (3, 3') eingerichtet ist.

7. Stangenmontierbare Halterung nach Anspruch 6, weiter **dadurch gekennzeichnet, dass**
- der Haltekörper (1') ein an der Handbrausenstange montierbares Stangenhalteteil (1a), ein Brausenhalteteil (1b) zum Halten der Handbrause und eine Drehkopplung (1c) umfasst, durch die das Brausenhalteteil (1b) an das Stangenhalteteil (1a) relativ zu diesem in einer ersten Drehrichtung (DR1) und/oder in einer der ersten entgegengesetzten zweiten Drehrichtung (DR2) verdrehbar gekoppelt ist, und
- die Drehkopplung (1c) eine weitere Schlingfedereinheit (13) umfasst, die sich unter Bereitstellung einer Verdrehwiderstandskraft über mehr als 180° um einen am Stangenhalteteil (1a) ausgebildeten Kopplungsstutzen (14) herumschlingt und mit dem Brausenhalteteil (1b) drehgekoppelt ist.

8. Stangenmontierbare Halterung nach Anspruch 7, weiter **dadurch gekennzeichnet, dass**
- die weitere Schlingfedereinheit (13) von einer sich zwischen einem ersten und einem zweiten Federende (15a, 15b) über mehr als 360° um den Kopplungsstutzen herum schlingenden Schlingfeder (15) gebildet ist, die nur an einem der beiden Federenden in beiden Drehrichtungen drehfest mit dem Brausenhalteteil (1b) gekoppelt ist oder am ersten Federende nur in der ersten Drehrichtung und am zweiten Federende nur in der zweiten Drehrichtung mit dem Brausenhalteteil (1b) gekoppelt ist.

9. Stangenmontierbare Halterung nach Anspruch 7 oder 8, weiter **dadurch gekennzeichnet, dass** das Stangenhalteteil (1a) die Stangendurchführungsöffnung (2') aufweist und die weitere Schlingfedereinheit (13) mit einer senkrecht zu einer Längsachsenrichtung (L_{S}) der Stangendurchführungsöffnung verlaufenden Federlängsachse (L_{F}) angeordnet ist.

## Claims

1. Rod-mountable holder comprising
- a holding body (1) configured for displaceable attachment to a rod and including a rod passage opening (2) for the rod,
- a clamping unit (4) movable between a clamp position and an enable position, which clamping unit, in case of the holding body attached to the rod, in the enable position is capable of enabling a shifting movement of the holding body along the rod and in the clamp position is capable of exerting a clamping force to block a shifting movement of the holding body along the rod, and
- an operating unit (5) for user-operated moving of the clamping unit between the clamp position and the enable position thereof,
**characterized in that**
- the clamping unit (4) is a wrap spring unit (6) wrapping around the rod passage opening and comprising a plurality of wrap springs (7₁, 7₂, 7₃) disposed adjacent to each other in a longitudinal axis direction (L_{S}) of the rod passage opening (2), each spring wrapping around the rod passage opening over more than 180°,wherein the respective wrap spring (7₁, 7₂, 7₃) is movable by the operating unit (5) between a constricting condition providing the clamp position of the clamping unit and an enlarging condition providing the enable position of the clamping unit, and/or
- the clamping unit (4) is a wrap spring unit (6) wrapping around the rod passage opening and comprising a wrap spring (7) wrapping around the rod passage opening over more than 360°, wherein the wrap spring (7) is movable by the operating unit (5) between a constricting condition providing the clamp position of the clamping unit and an enlarging condition providing the enable position of the clamping unit, and the operating unit is a push button unit (8) including a push button (8a) acting on the wrap spring unit or is a rotary knob unit (9) including a rotary knob (9a) acting on the wrap spring unit, wherein the push button is arranged to be movable with a radial main directional component (Tk) in relation to the respective wrap spring and a push button toggle lever coupling (17) or a push button slotted guide mechanism (10) is provided for translating the movement of the push button to a spreading movement of the ends of the respective wrap spring with a tangential main directional component in relation to the respective wrap spring, or wherein the rotary knob is mounted to be movable with a radial main directional component (Dk) in relation to the respective wrap spring about a rotational axis (D_{A}) and a rotary knob slotted guide mechanism is provided for translating the rotational movement of the rotary knob to a spreading movement of the ends of the respective wrap spring with a tangential main directional component in relation to the respective wrap spring.

2. Rod-mountable holder according to claim 1, further **characterized in that**
- the plurality of wrap springs, disposed adjacent to each other in the longitudinal axis direction of the rod passage opening, rest against each other with direct contact, thereby forming a wrap spring pack, and/or
- the wrap spring wrapping around the rod passage opening over more than 360° wraps around the rod passage opening over more than 720°.

3. Rod-mountable holder according to claim 1 or 2, further **characterized in that** the two ends (7a, 7b) of the respective wrap spring are located on a same side in relation to the rod passage opening.

4. Rod-mountable holder according to any one of claims 1 to 3, further **characterized in that** the constricting condition is an initial condition of the respective wrap spring and the wrap spring returns to said initial condition from the enlarging condition automatically by inherent elasticity.

5. Rod-mountable holder according to any one of claims 1 to 4, further **characterized by** an open, elastic clamping sleeve (12) which defines the rod passage opening, wherein the wrap spring unit is wrapped around said sleeve.

6. Rod-mountable holder according to any one of claims 1 to 5, further **characterized in that** it is configured as a holder for a sanitary hand-held shower, to this end its holding body (1, 1') being configured for being movably mounted on a rod (3, 3') of the hand-held shower.

7. Rod-mountable holder according to claim 6, further **characterized in that**
- the holding body (1') comprises a rod holding part (1a) mountable to the hand-held shower rod, a shower holding part (1b) for holding the hand-held shower and a rotatable coupling (1c), by means of which coupling the shower holding part is coupled to the rod holding part to be turnable relative to the latter part in a first rotational direction (DR1) and/or in a second rotational direction (DR2) opposite to the first rotational direction, and
- the rotatable coupling (1c) comprises an additional wrap spring unit (13) wrapping around a coupling stub (14) disposed on the rod holding part (1a) over more than 180°, thereby providing a turning resistance force, and coupled to the shower holding part (1b) for conjoint rotation.

8. Rod-mountable holder according to claim 7, further **characterized in that**
- the wrap spring unit is a wrap spring (15) wrapping around the coupling piece over more than 360° between a first and a second spring end (15a, 15b), which wrap spring is coupled to the shower holding part on only one of the two spring ends for conjoint rotation in both rotational directions, or is coupled to the shower holding part on the first spring end only in the first rotational direction and on the second spring end only in the second rotational direction.

9. Rod-mountable holder according to claim 7 or 8, further **characterized in that** the rod holding part includes a rod passage opening (2') and the wrap spring unit is arranged with a spring longitudinal axis (L_{F}) extending perpendicular to a longitudinal axis direction (L_{S}) of the rod passage opening.

## Revendications

1. Support pouvant être monté sur une barre, comprenant
- un corps de retenue (1, 1') qui est conçu pour être monté de manière coulissante sur une barre (3, 3') et qui présente une ouverture de passage de barre (2, 2') pour la barre,
- une unité de serrage (4) mobile entre une position de serrage et une position de libération, qui, lorsque le corps de retenue est monté sur la barre, libère dans la position de libération un déplacement du corps de retenue le long de la barre et exerce dans la position de serrage une force de serrage qui empêche un déplacement du corps de retenue le long de la barre, et
- une unité de commande (5) pour le déplacement, actionné par l'utilisateur, de l'unité de serrage entre sa position de serrage et sa position de libération,
**caractérisé en ce que**
- l'unité de serrage (4) est formée par une unité de ressorts enroulés (6) s'enroulant autour de l'ouverture de passage de barre, qui comprend plusieurs ressorts enroulés (7₁, 7₂, 7₃) disposés les uns à côté des autres dans une direction d'axe longitudinal (L_{S}) de l'ouverture de passage de barre (2), qui s'enroulent chacun sur plus de 180° autour de l'ouverture de passage de barre, le ressort enroulé respectif (7₁, 7₂, 7₃) pouvant être déplacé par l'unité de commande (5) entre un état de rétrécissement assurant la position de serrage de l'unité de serrage et un état d'élargissement assurant la position de libération de l'unité de serrage, et/ou
- l'unité de serrage (4) est formée par une unité de ressort enroulé (6) s'enroulant autour de l'ouverture de passage de barre, qui comprend un ressort enroulé (7) qui s'enroule sur plus de 360° autour de l'ouverture de passage de barre, le ressort enroulé (7) pouvant être déplacé par l'unité de commande (5) entre un état de rétrécissement assurant la position de serrage de l'unité de serrage et un état d'élargissement assurant la position de libération de l'unité de serrage, et l'unité de commande est une unité à bouton-poussoir (8), munie d'un bouton-poussoir (8a) agissant sur l'unité de ressort enroulé, ou une unité à bouton rotatif (9), munie d'un bouton rotatif (9a) agissant sur l'unité de ressort enroulé,
le bouton-poussoir est disposé de manière mobile avec une composante de direction principale (Tk) radiale par rapport au ressort enroulé respectif, et il est prévu un couplage à genouillère de bouton-poussoir (17) ou un guidage à coulisse de bouton-poussoir (10) qui traduit le mouvement du bouton-poussoir en un mouvement d'écartement des extrémités du ressort enroulé respectif avec une composante de direction principale tangentielle par rapport au ressort enroulé respectif, ou
le bouton rotatif est disposé de manière mobile autour d'un axe de rotation (D_{A}) avec une composante de direction principale (Dk) radiale par rapport au ressort enroulé respectif, et il est prévu un guidage à coulisse de bouton rotatif qui traduit le mouvement de rotation du bouton rotatif en un mouvement d'écartement des extrémités du ressort enroulé respectif avec une composante de direction principale tangentielle par rapport au ressort enroulé respectif.

2. Support pouvant être monté sur une barre selon la revendication 1, **caractérisé en outre en ce que**
- lesdits plusieurs ressorts enroulés disposés les uns à côté des autres dans la direction d'axe longitudinal de l'ouverture de passage de barre s'appuient les uns contre les autres en étant en contact mutuel et en formant un paquet de ressorts enroulés, et/ou
- le ressort enroulé s'enroulant sur plus de 360° autour de l'ouverture de passage de barre s'enroule sur plus de 720° autour de l'ouverture de passage de barre.

3. Support pouvant être monté sur une barre selon la revendication 1 ou 2,
**caractérisé en outre en ce que** les deux extrémités (7a, 7b) du ressort enroulé respectif se trouvent sur un même côté par rapport à l'ouverture de passage de barre.

4. Support pouvant être monté sur une barre selon l'une des revendications 1 à 3,
**caractérisé en outre en ce que** l'état de rétrécissement est un état initial du ressort enroulé respectif, vers lequel le ressort enroulé revient automatiquement et de manière auto-élastique depuis l'état d'élargissement.

5. Support pouvant être monté sur une barre selon l'une des revendications 1 à 4,
**caractérisé en outre par** une douille de serrage (12) ouverte et élastique qui définit l'ouverture de passage de barre et autour de laquelle s'enroule l'unité de ressort(s) enroulé(s).

6. Support pouvant être monté sur une barre selon l'une des revendications 1 à 5,
**caractérisé en outre en ce qu'**il est conçu comme support pour une douchette sanitaire, et à cet effet son corps de retenue (1, 1') est conçu pour être monté de manière coulissante sur une barre de douchette (3, 3').

7. Support pouvant être monté sur une barre selon la revendication 6, **caractérisé en outre en ce que**
- le corps de retenue (1') comprend une partie de retenue de barre (1a) pouvant être montée sur la barre de douchette, une partie de retenue de douchette (1b) pour retenir la douchette, et un couplage rotatif (1c) par lequel la partie de retenue de douchette (1b) est couplée à la partie de retenue de barre (1a) de manière à pouvoir tourner par rapport à celle-ci dans un premier sens de rotation (DR1) et/ou dans un deuxième sens de rotation (DR2) opposé au premier, et
- le couplage rotatif (1c) comprend une autre unité de ressort enroulé (13) qui, en assurant une force de résistance à la torsion, s'enroule sur plus de 180° autour d'une tubulure de couplage (14) formée sur la partie de retenue de barre (1a) et est couplée en rotation à la partie de retenue de douchette (1b).

8. Support pouvant être monté sur une barre selon la revendication 7, **caractérisé en outre en ce que**
- l'autre unité de ressort enroulé (13) est formée par un ressort enroulé (15) s'enroulant entre une première et une deuxième extrémité de ressort (15a, 15b) sur plus de 360° autour de la tubulure de couplage, qui n'est couplé à la partie de retenue de douchette (1b) qu'à l'une des deux extrémités de ressort de manière solidaire en rotation dans les deux sens de rotation ou qui n'est couplé à la partie de retenue de douchette (1b) à la première extrémité de ressort que dans le premier sens de rotation et à la deuxième extrémité de ressort que dans le deuxième sens de rotation.

9. Support pouvant être monté sur une barre selon la revendication 7 ou 8,
**caractérisé en outre en ce que** la partie de retenue de barre (1a) présente l'ouverture de passage de barre (2'), et l'autre unité de ressort enroulé (13) est disposée de manière à ce que l'axe longitudinal de ressort (L_{F}) s'étende perpendiculairement à une direction d'axe longitudinal (L_{S}) de l'ouverture de passage de barre.
